(19) **Europäisches Patentamt / European Patent Office / Office européen des brevets**

(11) **EP 1 994 716 B1**

(12) **EUROPEAN PATENT SPECIFICATION**

(45) Date of publication and mention
of the grant of the patent:
**09.08.2017 Bulletin 2017/32**

(21) Application number: **07712153.1**

(22) Date of filing: **06.02.2007**

(51) Int Cl.:
***H04L 29/06*** (2006.01)

(86) International application number:
**PCT/EP2007/051121**

(87) International publication number:
**WO 2007/090834 (16.08.2007 Gazette 2007/33)**

(54) **TRANSPORTING PACKETS**

TRANSPORTIEREN VON PAKETEN

TRANSPORT DE PAQUETS

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.02.2006 GB 0602314**

(43) Date of publication of application:
**26.11.2008 Bulletin 2008/48**

(73) Proprietor: **Telefonaktiebolaget LM Ericsson (publ)**
**164 83 Stockholm (SE)**

(72) Inventor: **ISOSAARI, Mika**
**FIN-02600 Espoo (FI)**

(74) Representative: **Brann AB**
**P.O. Box 3690**
**Drottninggatan 27**
**103 59 Stockholm (SE)**

(56) References cited:
**US-A1- 2003 193 950      US-B1- 6 618 368**

- **HA E. J. ET AL.: "Voice traffic multiplexing scheme with guaranteed QoS between VoIP access routers using DiffServ" ELECTRONICS LETTERS, IEE STEVENAGE, GB, vol. 37, no. 13, 21 June 2001 (2001-06-21), pages 828-829, XP006016769 ISSN: 0013-5194**
- **KEIKO TANIGAWA TOHRU HOSHI KOJI TSUKADA HITACHI ET AL.: "Simple RTP Multiplexing Transfer Methods for VoIP" IETF STANDARD-WORKING-DRAFT, INTERNET ENGINEERING TASK FORCE, IETF, CH, no. 1, 18 November 1998 (1998-11-18), pages 1-10, XP015035946 ISSN: 0000-0004**
- **MOOI C. CHUAH ENRIQUE J. HERNANDEZ-VALENCIA LUCENT TECHNOLOGIES BELL LABORATORIES: "A LightWeight IP Encapsulation (LIPE) Scheme" IETF STANDARD-WORKING-DRAFT, INTERNET ENGINEERING TASK FORCE, IETF, CH, no. 1, August 2000 (2000-08), XP015011799 ISSN: 0000-0004**

**Description**

Field of the Invention

The present invention relates to a method of transporting packets, in particular to transporting packets between one network node and another network node.

Background of the Invention

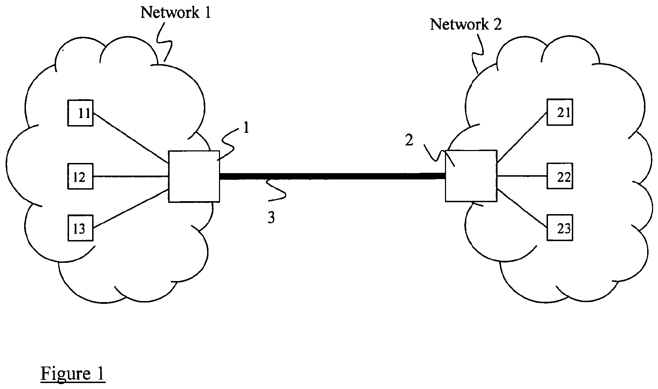

Figure 1 is a schematic illustration of devices 11,12,13 in a first network, Network 1, communicating with devices 21,22,23 in a second network, Network 2. For example, device 11 in Network 1 may be sending packets to devices 21 and 23 in Network 2, and device 12 in Network 1 may be sending packets to device 22 in Network 2. Packets sent by a device 11,12,13 in Network 1 are initially routed to a host 1 in Network 1, and are then sent over a communication link, for example, an IP backbone 3, to a host 2 in Network 2. The host 2 in Network 2 routes a received packets to device 21, device 22 or device 23 in accordance with the destination specified in the packet. All packets passing from Network 1 to Network 2, or vice versa, pass over the link 3.

A packet consists, in general, of a header and a payload. The header contains details of the routing of the packet, such as the destination of the packet and the origin of the packet. Thus, for example, a packet generated by device 11 and destined for device 21 will have a header that, inter alia, identifies the destination of the packet to be device 21. When the packet is received at the host 1, the host 1 will read the destination from the header of the packet, will identify the destination as being in Network 2 and will forward the packet to the host 2 of Network 2 over the link 3. When the packet is received at the host 2 of Network 2, the host 2 will read the destination from the header of the packet and will identify the destination as device 21.

The address for a device (or, more generally, for a "network node") is commonly an IP (Internet Protocol) address.

A particular device may serve a number of different applications such as, for example, a e-mail system, a web browser, etc. The header of a packet therefore generally not only identifies the destination device but also identifies the particular application to which the packet's contents relate. The particular application is generally identified by a "UDP port number". The header of a packet transmitted along link 3 will therefore typically contain an IP address field and a UDP port field.

The header of a packet may, depending on the application to which the packet's contents relate, contain further fields such as, for example, a "Real Time Protocol" (RTP) field. An RTP field relates to the framing and handling of real time data such as VoIP data. Thus, header of a VoIP packet transmitted along link 3 will therefore typically contain an RTP field in addition to an IP address field and a UDP address field.

There is currently much effort expended on transmitting telephone calls over the Internet, or "VoIP" (Voice over Internet Protocol). One major issue in VoIP is the massive amount of overhead caused by IP/UDP/RTP framing of the packet header. With IPv6 (Internet Protocol version 6 address realm) a header with IP, UDP and RTP fields has a total length of 60 bytes but the actual payload of the packet may be as low as 15-20 bytes, meaning that over 75% of the bandwidth may be consumed by the header of the packet.

Several header compression schemes have been introduced to overcome this problem, but they have been designed for point-to-point connections rather than for a case where many different packet flows are transmitted over a common link as in figure 1. These header compression schemes are in practice useless except in the radio interface. Moreover, if header compression were introduced in a fixed network it would have strict requirements for compression which it would not be possible to follow in a public commercial IP network. Thus there is a need for other means to decrease the bandwidth demand of VoIP in a core network according to the 3GPP specifications.

US 6618368 proposes an audio gateway for receiving an internet relay request and a number called in a call from a telephone via the internet. The relay audio data arc multiplexed for streams based on multiple relay requests having the same relay destination so that the relay audio data in those streams are multiplexed into a single relay stream.

"Voice traffic multiplexing scheme with guaranteed QoS between VoIP access routers using Diffsez-v" by Ha et al, Electronics Letters Vol. 37, No. 13 (2001), proposes an architecture for a multiplexed packet. It does not address selection of packets for multiplexing into a single packet.

US 2003/019350 proposes a communications protocol which comprises the use of a communication frame adapted to be used as a UDP payload. The frame comprises a plurality of mini packets, where at least some of the mini packets comprise a composite header and a data packet, where the composite header comprises a mini header with an identification of a user associated with a data packet; a flag indicating whether the protocol header is in a compressed mode or is in a transparent mode; an indication of the length of the mini packet; and a protocol header.

"Simple RTP Multiplexing Transfer Methods for VoIP" by Tanigawa et al., IETF Standard-working-draft, 18 November 1998, proposes an example of three streams each containing a packets, with two streams intended for the same destination. The two packets for the common destination are queued into a single queue, and arc multiplexed into a single packet. The packet does not have a multiplexing field in the header, and this limits the application of this proposal.

"A Lightweight IP Encapsulation (LIFE) Scheme" by Chuah et al., IETF Standard-working-draft, August 2000, proposes an architecture for a multiplexed packet.

Summary of the Invention

A first aspect of the present invention provides a method of transporting IP packets between nodes of a 3GPP IP network, the method comprising:

receiving packets at a first network node of the 3GPP network;
separating the received packets into a plurality of streams, where the packets of each stream share a common IP header denoting a second network node of the 3GPP network as destination for the packet;
in a bearer initialisation phase of an Nb/Iu interface, agreeing, separately for each stream, between the first network node and the second network node, whether packet multiplexing may be used;
if packet multiplexing may be used, merging a plurality of packets to form a merged packet; and
sending the merged packet to a second network node.

In the method of the invention two, or more, packets are merged (or are "multiplexed"). The payloads of the component packets used to form the merged packet are sent in the merged packet under a common header. The header of the merged packet occupies a lower proportion of the length of the merged packet than does the header of a single packet. That is if two packets (as an example) are merged, the length of the header of the merged packet will be less than the sum of the lengths of the headers of the two component packets.

In the case of real-time traffic, a merged packet preferably contains no more than one packet from any stream. In the case of non real-time traffic, however, it is in principle possible for a stream to contribute two or more packets to a merged packet.

Sending a merging packet through a communications network requires no modification to the network.

When the merged packet is received at the second network node, it is separated into its component packets.

A method of the invention may be applied to, for example, speech traffic transported over IP in a 3GPP UMTS network over an Nb-interface between media gateways (MGWs) or over an Iu-interface between an RNC and MGW. However, merging (or multiplexing) packets can be performed essentially for all packets heading to the same IP address, and the invention can be used for all kind of UDP traffic. A multiplexing method of the invention may in particular be used with RTP packets (although it may not be applicable to RTCP (Real Time Control Protocol) which may continue to be transported normally by IP/UDP packets. The multiplexing method is independent of the protocols beneath IP and it can be used in, for example, an MPLS (Multi-Protocol Label Switching) enabled network as well as in any other IP-based network.

Brief description of the Drawings

Preferred embodiments of the invention will now be described by way of illustrative example with reference to the accompanying figures in which:

Figure 1 is a schematic illustration of a communications system;
Figure 2 is a block flow diagram of a method of the invention;
Figures 3(a) and 3(b) are schematic illustrations of packets used in the method of the invention;
Figure 3(c) is a schematic view of a multiplex header;
Figure 3(d) is a schematic illustration of another packet used in the method of the invention;
Figure 4 is schematic illustration of formation of a merged packet;
Figure 5 is a schematic view of a multiplex header; and
Figure 6 is a schematic view of a compressed RTP header.

Detailed description of the Preferred Embodiments

The invention will be described, by way of example, with reference to the network shown in figure 1. It will be assumed, as an example, that various applications controlled by devices in Network 1 are sending packets to devices Network 2, but the invention may equally well be applied to the case of devices in Network 2 sending packets to Network 1.

In one embodiment, one device in Network 1, for example device 11, is the source of two or more streams of packets destined for devices in Network 2. It is assumed that the streams have the same DiffServ class. This in practice requires that the traffic of one stream is very similar to that of the other stream, and in many cases the two streams are likely to relate to the same application.

It is further assumed that the addresses are already negotiated between the devices so that, for example, a packet going from device 11 to 21 has device 11's IP address as the source address and device 21's IP address as the destination address. In this example, packets in a stream going from device 11 to device 21 can be merged only with packets in one or more other stream going from device 11 to device 21 and multiplexing for those streams is performed in device 11. (Similarly, merging of streams going from device 12 to device 21 would be performed in device 12, merging of streams going from device 21 to device 11 would be performed in device 21, and so on.) Hosts 1 and 2 are used only as routers in this example.

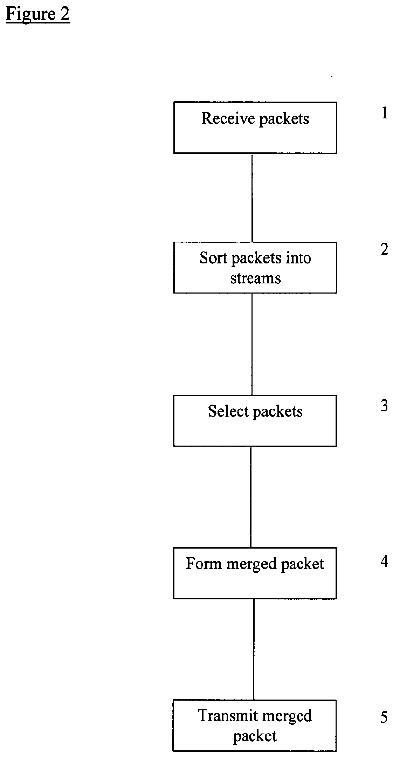

In this example, initially packets are received at device 11 (step 1 of figure 2). In this example, these are assumed to include, inter alia, two or more streams of packets destined to device 21 and that the same DiffServ class (and may also include further streams of packets having a different destination device in Network 2 and/or relating to another DiffServ class).. Packets destined for device 21 will have a header containing, inter alia, the IP address of device 21, and packets destined to device 22[23] will have a header containing, inter alia, the IP address of device 22[23].

Next, the packets received at device 11 are sorted into two or more streams, with each stream corresponding to a single IP address (step 2 of figure 2). In this example, this sorting step will result in two (or more) streams of packets destined from device 11 to device 21 and that relate to the same DiffServ class, and may possibly also result in further streams of packets having a different destination device in Network 2 and/or relating to another DiffServ class.

It is preferable that each stream created at step 2 contains only packets of one type (more formally, each stream preferably contains only packets of one DiffServ class). Thus, in the example in which two (or more) different applications (for example VoIP and e-mail) controlled by device 11 in Network 1 are sending packets to device 21 in Network 2, for example, the packets arriving at device 11 would preferably be sorted into streams such that VoIP packets and e-mail packets were not included in the same stream as one another.

Next, a plurality of packets are selected (step 3 of figure 2) and are merged to form a merged packet (step 4 of figure 2). The packets selected for merging have the same IP address as one another, for example are all destined to device 21 and so have device 21's IP address as their destination address. The merged packet contains a single IP field in its header, since all the component packets of the merged packet are destined for the same IP address. The merged packet also contains a plurality of payload fields, one payload field for each of the component packets.

In the case of real-time traffic, a merged packet preferably contains no more than one packet from any stream. In this case, the selecting step would consist of selecting one packet from each stream (or, more generally, selecting one packet from each stream that is not empty). If a stream contains two or more packets, the packet that is selected is preferably the packet that has been waiting in the stream for the longest time.

In the case of non real-time traffic, however, it is in principle possible for a merged packed to contain two or more packets from a stream.

In a preferred embodiment, a merged packet contains only packets of the same type (that is, contains packets of only one DiffServ class). In this embodiment a merged packet may be formed by merging a packet from one stream of, for example, VoIP packets destined for device 21 with a packet from another stream of VoIP packets destined for device 21. Similarly, a merged packet may be formed by merging a packet from one stream of, for example, e-mail packets destined for device 21 with a packet from another stream of e-mail packets destined for device 21, by merging a packet from one stream of, for example, VoIP packets destined for device 22 with a packet from another stream of VoIP packets destined for device 22, etc.

Next, the merged packet is transmitted to the destination indicated by the IP address field in the header of the merged packet (step 5 of figure 2). In the example, a merged packet formed by merging a packet from two streams of VoIP packets destined for device 21 is transmitted to device 21, a merged packet formed by merging a packet from two streams of packets destined for device 22 is transmitted to device 22, and so on.

When the merged packet is received at the destination indicated by the IP address field in the header of the merged packet, the merged packet is split into its component packets.

In a preferred embodiment of the invention, the header of the merged packet contains an indication that the packet is a merged packet. In a particularly preferred embodiment, this is done by including, in the header of the merged packet, a UDP port number that denotes that the packet is a merged packet. This UDP port number corresponds to a UDP port at the destination device that is reserved for merged packets - one UDP port is assigned as the "multiplexing port" into which all merged packets are sent. Since this port is reserved for merged packets, it is not allowed to be assigned to any individual connections and this port will thus receive only merged packets. The destination device then knows when an arriving packet is a merged packet. In this embodiment, when a merged packet is received at the destination device indicated by the IP address field in the header of the merged packet, the merged packet would be directed to the UDP port of the destination device that is reserved for merged packets.

By including a UDP port number in the header of the merged packet, no additional mapping tables are required.

The UDP port reserved for merged packets is proposed to be port 2002.

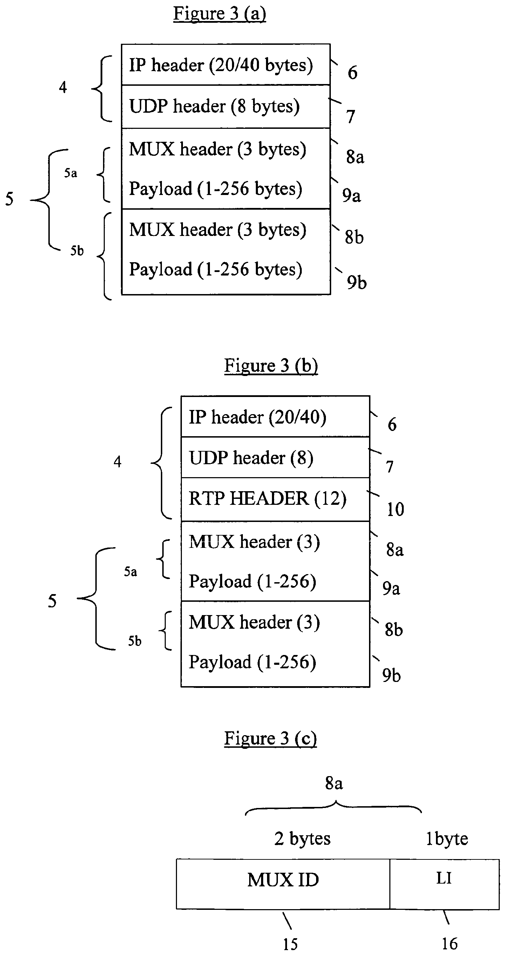

Figure 3(a) is a schematic illustration of a merged packet 14 used in the method of the invention. The packet 14 has, as usual, a header 4 and a payload 5. The header contains an IP address field 6, which contains the IP address of the destination device of the merged packet. As explained above, the header 4 may also contain a UDP field 7 that identifies the port number of the UDP port reserved for merged packets at the destination device. Alternatively, the header may contain another field that identifies the packet as a merged packet.

For non-real-time traffic it is possible for all component packets used to form the merged packet to have the same UDP port number, and in this case the UDP field 7 of the header 4 could contain the original UDP port number rather than a UDP port number that is specifically assigned to merged packets. This would, however, require that all UDP ports would have to be able to detect and handle merged packets. In practice, therefore, it is preferable have a UDP port, which is distinct from the conventional application UDP ports, specifically assigned to handle merged packets. If one UDP port is assigned to handle merged packets, all other ports can receive packets normally and are not affected by the packet multiplexing of the invention.

The payload 5 of the merged packet 14 contains an number of multiplexed packet fields 5a,5b, one multiplexed packet field corresponding to each component packet. Figure 3(a) shows a merged packet formed by merging two component packets, and the merged packet therefore has two multiplexed packet fields; however, the invention is not limited to this and more than two packets may be merged to form a merged packet.

The header 4 of the packet 14 is a "common header", in that the information in the header 4 is common to all the multiplexed packet fields 5a,5b.

Each multiplexed packet field 5a,5b contains a multiplexing header ("MUX header") 8a,8b and a payload field 9a,9b. The multiplexing header is shown in figure 3(c). The multiplexing header 8a,8b contains a multiplexing ID field 15, which may include the whole UDP port information. The multiplexing ID field 15 is for identification of different connections. Its value is the same as the UDP destination port if the packet were sent conventionally without using the multiplexing of the invention - that is, the multiplexing ID field 15 is the UDP port number of the original component packet.

The multiplexing header 8a,8b preferably also contain a payload length indicator field 16. This field is provided since the multiplexing ID field 15 does not indicates when the next multiplexed packet field starts. Thus, the payload length indicator field 16 indicates the number of bytes in the each multiplexed packet field (header 8a,8b and payload 9a,9b) to enable the start of the next multiplexed packet field to be determined.

In one embodiment, the multiplexing ID field is a 16-bit (2-byte) field, and the payload length indicator field is an 8-bit (one-byte) field (giving a maximum length for the fields following the payload length indicator field of 256 bytes). Thus, in this embodiment, the MUX header field, overall, is a 3-byte field.

Each multiplexed packet field 5a,5b is formed as:

|| Mux ID / UDP port (2 bytes) || Length Indicator (1 byte) || Payload  (1-256 bytes)||

The header 4 of the merged packet 14 may contain other fields in addition to those shown in figure 3(a). As an example, the header 4 of the merged packet may further contain an RTP header field that contains RTP information for the merged packet. Figure 3(b) is a schematic illustration of a merged packet 14' whose header 4 further contains an RTP header field 10.

In some applications, such as voice traffic in a 3GPP network, the RTP information is essential. The packet structure shown in figure 3(b) may be used where all the component packets of the merged packet share a common IP/UDP/RTP header and could be used in cases where individual RTP information for each packet is not needed. In some applications, however, individual RTP information for each packet is needed and, in such a case, the packet structure of figure 3(b) is not suitable.

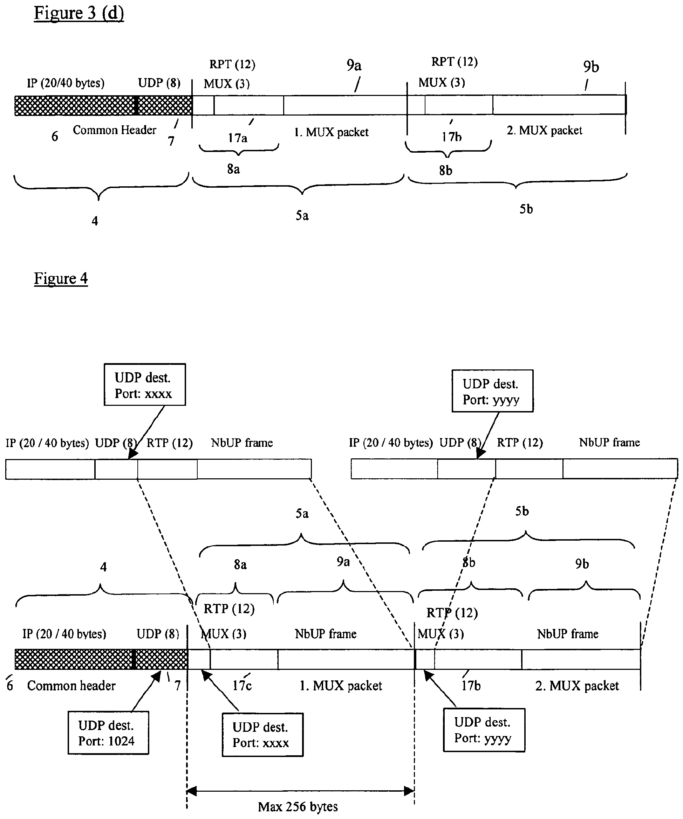

Figure 3(d) shows a further packet structure in which the header 8a,8b of each multiplexed packet field 5a,5b contains RTP information. The RTP information is provided in an RTP field 17a,17b within the MUX header 8a,8b. In this example, the RTP field 17a,17b has a length of 12 bytes.

Figure 4 illustrates formation of the merged packet of figure 3(d). The common header 4 of the merged packet contains an IP address field 6 and a UDP header field 7. The UDP header field contains a UDP port number (eg 2002) identifying the packet as a merged packet. Each multiplexed packet field 5a,5b has an MUX header containing a UDP port number corresponding to the UDP port number of the component packet, and a payload length indicator field (not shown). Each multiplexed packet field 5a,5b further has an RTP header field 17a,17b, and a payload field 9a,9b (in this example, the payload is shown as an NbUP frame). The fields following the payload length indicator field - that is, the RTP header field 17a,17b, and a payload field 9a,9b - have a maximum overall length of 256 bytes (in the example of a one byte payload length indicator field).

It is preferable that packets are selected for merging at step 3 of figure 2 soon after they have been put into their respective streams, to avoid introducing an additional delay into the network. In one embodiment, the merging step is carried out by selecting packets that arrived at the network node within a given time frame (and forming the merged packet soon after the end of the time frame). The duration of the time frames should be made large enough to ensure that packets are likely to have arrived in several streams in a time frame (carrying out the merging step by selecting packets that arrived at the network node within a given time frame effectively limits the number of component packets merged into a merged packet), to ensure that a useful saving in bandwidth is obtained, but should not be so large that significant delay and multiplexing jitter are introduced. A duration of around 1ms for the time frame should be suitable in many applications - a time frame of this order should be long enough to gather several packets into a merged packet but should be short enough to keep delay and multiplexing-jitter low.

For applications that are not time-sensitive, or if a user is prepared to accept greater delay/jitter to obtain greater bandwidth savings, a longer time frame can be used. A duration of 1ms is, however, a preferred value for real-time traffic.

Subject to the desire not to introduce significant delay into the network, there is essentially no limitation on the number of packets that can be multiplexed into a merged packet. An IP datagram has a maximum length of 65535 bytes and Ethernet frame has a maximum length of 1518 bytes, meaning that the Ethernet frame size is, in practice, what limits the number of packets that can be multiplexed into one merged packet.

A further benefit of the present invention, in addition to the reduction in bandwidth, is that the number of packets in the network is also reduced. When only two packets at a time are multiplexed into a merged packet, the number of packets in the network is immediately reduced to 50 % of its previous value. Moreover, tens of packets may be multiplexed into one merged packet, and this means that the number of packets in the network may be reduced to a few per cent of the number of packets in a network when multiplexing is not used. (If ten packets at a time, for example, are multiplexed into a merged packet, the number of packets in the network is reduced to 10 % of its previous value.) This reduction in number of packets in the network brings tremendous processing savings in the network routers, which process traffic per packet. This has a positive influence also to speech quality, in the case of VoIP, since fewer packets are in the network and therefore fewer packets are likely to be dropped during transmission. If a packet is dropped for some reason the impact spreads out to multiple connections and the actual impact on one connection is not, in practice, substantial.

Table 1 shows examples of the bandwidth reduction that can be obtained by the present invention. Table 1 shows results for four different cases, PoS for both IPv4 and IPv6, and Ethernet for both IPv4 and IPv6. In the PoS examples the network is assumed to use double MPLS framing (VPN and traffic type differentiation) and the Ethernet examples assume that a VLAN tag is used. The figures are for AMR12.2 packets with a 60% activity factor.

Table 1 shows, for each of the four cases, the bandwidth (BW) without multiplexing, the bandwidth with 2 packets multiplexed into a merged packet, and the bandwidth with 10 packets multiplexed into a merged packet. The results assume that the merged packets have the form shown in figure 3(d), with a common IP/UDP header and RTP information in each MUX header.

Table 1

|  | PoS, IPv4 | PoS, IPv6 | Eth, IPv4 | Eth, IPv6 |
|---|---|---|---|---|
| BWref | 22,88 kbps | 28,08 | 29,90 | 35,10 |
| BW, 2 pkts | 18,07 kbps | 20,67 | 21,58 | 24,18 |
| Decrease | 21 % | 26 % | 28 % | 31 % |
| BW, 10 pkts | 13,60 kbps | 14,12 | 14,30 | 14,82 |
| Decrease | 41 % | 50 % | 52 % | 58 % |

(The bandwidths shown for 2 or 10 component packets merged into one are the effective bandwidth per component packet - i.e. a merged packet having two component packets would, in the PoS, IPv4 case, have a bandwidth of 36.14kbps.)

In a further preferred embodiment of the invention, to achieve even better bandwidth savings, the RTP header fields are compressed. This is possible since an RTP header includes many static fields that remain unchanged during an RTP session, so that in many cases the RTP header may be compressed. The RTP compression is additional to the multiplexing of packets into merged packets, so that it is always possible to go back to pure multiplexing in circumstances where RTP compression may not be used.

In a particularly preferred embodiment, a merged packets that use RTP header compression are sent to a UDP port that is reserved for merged packets with RTP header compression. Thus, preferably one UDP port that is reserved for merged packets with RTP header compression and another UDP port is reserved for merged packets without RTP header compression.

The UDP port reserved for merged packets with RTP header compression is proposed to be port 2004. This port would used in the same way as port 2002 is used for merged packets without RTP header compression.

In compression there is always an initialization phase first where the full header is transferred to the receiver. The full header is stored and it is used in decompression. After the initialization phase, only compressed headers are sent unless the information in the header changes too much in which case it would be necessary to send a full header. Alternatively, to confirm that the full header has been received and the initialization is done the sending of the header compressed packets may not be initiated immediately after the first packet. For example, the first ten packets may be non-compressed packets with subsequent packets being compressed packets, and the same procedure (ie, sending the first ten packets as non-compressed packets) may be repeated if the header has to be updated.

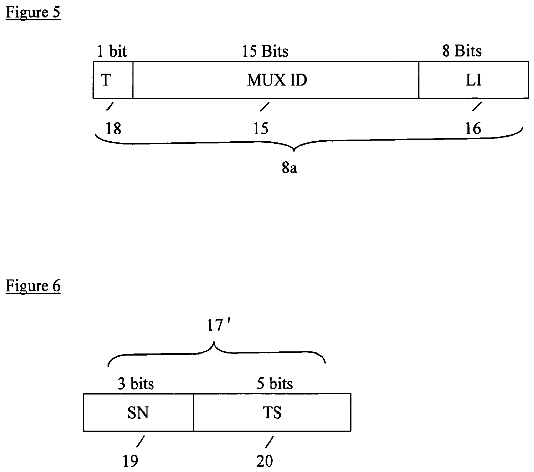

One possible structure for the header 8a,8b of a multiplexed packet field is shown in Figure 5. The multiplexing header of figure 4 includes a type field 18, having a length of 1 bit. The type field 18 has two possible states, 0 for indicating a merged packet without RTP header compression and 1 for indicating a merged packet with RTP header compression.

The header 8a of figure 5 also includes a multiplexing ID field 15 and a payload length indicator field 16. The multiplexing ID field 15 has a length of 15 bits, and is for identification of different connections. The value of the multiplexing ID field 15 is the same as the UDP destination port of a non-multiplexed packet divided by two (only even numbered ports are used for RTP sessions). The payload length indicator field 16 has a length of 8 bits, and gives the length (header + payload) of the multiplexed RTP packet in bytes.

Figure 6 illustrates one possible format of a compressed RTP header 17'. The RTP header compression mechanism of figure 6 is an example and other mechanisms may be also used.

An RTP header contains two fields that change during a connection and that need to be transferred within each packet, the sequence number and timestamp. Both fields change, however, in a well defined way. The sequence number steps by one with every sent packet indicating any packet losses, and the timestamp depicts the time difference between consecutive packets.

The compressed RTP header 17' of figure 6 includes a sequence number (SN) field 19, of length 3 bits. The sequence number field 19 changes as the original sequence number, but has only 8 states, which should be enough since packets are generally sent in very low BER networks. If the sequence number field is inadequate, a full RTP header should be used.

The compressed RTP header 17' of figure 6 also includes a timestamp (TS) field 20, of length 5 bits. The timestamp field 20 changes basically as the original timestamp, but the actual time difference denoted by one step of the timestamp field depends on the payload type since the type is known based on the initialization messages. One step of the timestamp field 20 in the compressed RTP header 17' signifies 80 steps (5 ms x 16 kHz = 80) for PCM voice and 320 steps (20 ms x 16 kHz = 320) for AMR coded voice when converted to the original steps in a timestamp field. If the timestamp field is for some reason inadequate, a full RTP header should be used.

The compressed RTP header 17' may be used in place of the full (ie, uncompressed) RTP header fields in a merged packet, for example in place of the full RTP header fields 17a,17b of the merged packet of figure 3(d).

Alternatively, the in the compressed RTP header of figure 6 the sequence number SN field may be 8 bits, and the timestamp TS field may be 16 bits. In this case each field has half the length that it would have in an uncompressed header according to Request for Comments 3550. The TS field changes as the original timestamp (RFC3550) but the length is half of the original resulting in modulo of 4 seconds with 16 kHz clock reference.

Table 2 shows examples of the bandwidth reduction that can be obtained by the present invention when RTP compression is employed. Table 2 shows results for the four cases considered in Table 1, under the same assumptions as made for Table 1.

Table 2

|  | PoS, IPv4 | PoS, IPv6 | Eth, IPv4 | Eth, IPv6 |
|---|---|---|---|---|
| BW ref | 22,88 kbps | 28,08 | 29,90 | 35,10 |
| BW, 2 pkts | 15,73 kbps | 18,33 | 19,4 | 21,84 |
| Decrease | 31 % | 35 % | 36 % | 38 % |
| BW, 10 pkts | 11,26 kbps | 11,78 | 11,96 | 12,48 |
| Decrease | 51 % | 58 % | 60 % | 64 % |

It should be noted that not all devices can support multiplexing to form merged packets and/or also RTP header compression. Thus, before sending packets it is necessary for the sending node and the receiving node to agree that multiplexing to form merged packets is used, and also to agree whether RTP header compression is used.

The bearer initialization phase in both Nb- and Iu-interfaces include mandatory messages for the support mode that is used, e.g. for speech traffic. Nb/Iu UP PDU Type 14 is used at initialization and the messages include spare extension fields (in both initialization and acknowledgement frames) that can be used for any additional function. It is proposed that these fields are used to detect whether a multiplexing method of the invention is applicable. (The transparent mode in the Iu-interface would not support multiplexing since it has no initialization phase, but this mode is not used by real-time applications.)

When an originating node (e.g., a MGW (media gateway) or RNC) that supports multiplexing sends an initialisation message it would indicate in the initialisation message that it would like to use multiplexing, e.g. by setting the first bit to 1 or using a specific sequence in the spare extension field of the initialization frame. The receiving node knows, from that bit or sequence in the initialisation message, that multiplexing can be used. If the receiving node supports multiplexing it copies the bit or sequence to the spare extension field of the positive acknowledgement message for the indication, ands transmits the acknowledgement message to the originating node. This confirms to the originating node that multiplexing can be used. If, however, the receiving node does not support multiplexing it just ignores the spare extension in the initialization message and sends a regular acknowledgement - the originating node that started the initialization knows then not to use multiplexing.

Since a node may support multiplexing but not RTP header compression, the initialisation message sent by an originating node that can support both multiplexing and RTP header compression must contain separate indications relating to multiplexing and RTP header compression. For example, if the first bit of the initialisation message indicates that the originating node can support multiplexing, then the fact that the originating node can additionally support RTP header compression could be indicated by the first two bits (or by a different sequence). The destination node can now reply in three ways. The destination node may indicate that multiplexing with RTP header compression may be used, for example by repeating the bits or sequence. The destination node may however reply by indicating that multiplexing but not RTP header compression may be used (for example by replying with the one bit/sequence indicating normal multiplexing) or it may reply by indicating that multiplexing may not be used (for example, by replying without any multiplexing indications).

For an Nb interface there already is a standardised protocol for bearer control, IP Bearer Control Protocol (IPBCP), and this could be used also for detecting multiplexing applicability. IPBCP cannot however be used for an Iu-interface and therefore UP initialization as a more common solution may better for initializing when it is necessary to determine whether multiplexing is possible. In general, the step of determining whether multiplexing is applicable can be seen as a migration phase function, which could be left out when it is known that all relevant nodes support multiplexing. In this case, multiplexed packets could be always detected based on the UDP port (e.g., port 2002 for normal multiplexed packets and port 2004 for multiplexed packets with RTP header compression).

In principle, RTP header compression could be applied to a merged packet having a common RTP header (as in figure 3(b)), or even to a conventional unmerged packet. In these cases, however the bandwidth saving with RTP header compression would be only about 5-10%, which is unlikely to justify the complexity that RTP header compression would add to the connection handling.

In the example given above, it was assume that addresses had been negotiated between devices so that, for example, a packet going from device 11 to 21 has device 11's IP address as its source address and device 21's IP address as the destination address. In this example, only streams from one originating device 11,12,13 to one terminating device 21,22,23 may be merged, and the merging occurs in the originating device. Hosts 1 and 2 are used only as routers in this example. The invention is not however limited to this.

For example, it may be that networks 1 and 2 have some other internal routing mechanism and that for all streams between a device 1x and a device 2x the connection between host 1 and 2 has to be separately established. ("Device 1x" denotes the devices 11, 12, 13 in Network 1, and "device 2x" denotes the devices 21, 22, 23 in Network 2.) This is the case in e.g. 3GPP based networks where an IP transport network is used between host 1 and 2, and networks 1 and 2 are in practice radio access networks which use TDM or ATM instead of IP. The hosts 1 and 2 then are media gateways that handle media conversions and negotiations so that network 1 can be connected to network 2 (since direct communication as in the previous example is not possible owing to the different transport network in between). Since the connection between host 1 and 2 is negotiated separately and is independent of the real source and destination, all streams of packets going from network 1 to network 2 have, at link 3, the same IP source & destination address pair and they can all be merged (multiplexed) in the Host 1 for packets going from Network 1 to Network 2 (and can be multiplexed in the Host 2 in the case of packets going from Network 2 to Network 1).

In this alternative example, packets arriving at host 1 (in the case of packets passing from Network 1 to Network 2) are sorted into streams, with each stream preferably comprising packets of a single DiffServ class. A merged packet is then formed by merging packets from two or more streams, and the merged packet is transmitted to Host 2. The merged packet is de-merged in Host 2, and the constituent packets are passed to their respective destinations in Network 2.

This second example particularly shows the potential of the mechanism since the multiplexing gain is directly proportional to the number of streams that can be multiplexed and now the merging can be performed at the link where the traffic load is normally the highest and the most expensive (ie, the core links between separate sites). When the merging is performed at Host 1, it is possible to merge a packet from a stream originating at device 11 and destined for device 21 with a packet from any other stream originating at a device 1x in Network 1 and destined for a device 2x in Network 2 (subject to the proviso that preferably packets of only one DiffServ class are merged).

The method of the invention may be applied to IMS packets. This would require a different kind of initialization process, with SIP.

The method of the present invention may be implemented by a suitably programmed processor. A program for controlling a processor to perform the method of the invention may be stoted on any suitable storage medium such as, for example, a computer disk, a magnetic disk or an optical disk.

**Claims**

1. A method of transporting IP packets between nodes of a 3GPP IP network, the method comprising:

   receiving packets at a first network node (1,11,12,13) of the 3GPP IP network;
   separating the received packets into a plurality of streams, where the packets of each stream share a common IP header denoting a second network node (2,21,22,23) of the 3GPP IP network as destination for the packet;
   in a bearer initialisation phase of an NB or Iu interface, agreeing, between the first network node (1,11,12,13) and the second network node (2,21,22,23), whether packet multiplexing may be used;
   merging a plurality of packets to form a merged packet; and
   sending the merged packet to the second network node (2,21,22,23).

2. A method as claimed in claim 1 wherein the packets of a stream contain information of the same type.

3. A method as claimed in claim 2 wherein the packets of at least one stream are VoIP packets.

4. A method as claimed in claim 1, 2 or 3 wherein the step of merging a plurality of packets to form the merged packet comprises selecting a packet from at least a first stream and a packet from at least a second stream and merging the selected packets to form the merged packet.

5. A method as claimed in claim 4 when dependent from claim 2 or 3 wherein packets of the first stream and packets of the second stream contain information of the same type.

6. A method as claimed in any preceding claim wherein the step of merging a plurality of packets comprises merging packets that were received at the first network node (1,11,12,13) within a predetermined time window.

7. A method as claimed in any preceding claim wherein the merged packet contains a common header (4) and two or more multiplexed packet fields (5a,5b), each multiplexed packet field (5a,5b) corresponding to a respective component packet of the merged packet.

8. A method as claimed in claim 8 and comprising the further step of indicating, in the common header (4) of the merged packet, that the packet is a merged packet.

9. A method as claimed in claim 8 and comprising assigning a UDP field (8) to the common header (4) of the merged packet, the UDP field (8) denoting a merged packet, and further comprising assigning a selected UDP port to handle only merged packets.

10. A method as claimed in any of claims 7 to 9 and comprising providing common RTP information (12) in the common header (4).

11. A method as claimed in any of claims 7 to 9 and comprising providing RTP information (12) for each component packet in the respective multiplexed packet field (5a,5b).

12. A method as claimed in claim 11 wherein said RTP information is compressed RTP information and comprising indicating, in the merged packet, that the packet contains compressed RTP information wherein each multiplexed packet field contains a respective header, and wherein the method further comprises indicating in the respective header that the packet contains compressed RTP information.

13. A method as claimed in any preceding claim and comprising the further step of, at the second network node (2,21,22,23), separating the merged packet into its component packets.

14. A storage medium containing a program for controlling a processor to carry out a method as defined in any one of claims 1 to 13.

15. A node (1,11,12,13) of a 3GPP IP network, the node comprising:

> means for receiving packets;
> means for separating the received packets into a plurality of streams, where the packets of each stream share a common IP header denoting a second network node (2,21,22,23) of the 3GPP IP network as destination for the packet;
> means for, in a bearer initialisation phase of an NB or Iu interface, agreeing, with the second network node (2,21,22,23), whether packet multiplexing may be used;
> means for merging a plurality of packets to form a merged packet; and
> means for sending the merged packet to the second network node (2,21,22,23).

16. A node as claimed in claim 15 and adapted to separate the received packets into the plurality of streams such that the packets of a stream contain information of the same type and/or adapted to form the merged packet by selecting a packet from at least a first stream and a packet from at least a second stream and merging the selected packets to form the merged packet, wherein packets of the first stream and packets of the second stream contain information of the same type.

**Patentansprüche**

1. Verfahren zum Transportieren von IP-Paketen zwischen Knoten eines 3GPP-IP-Netzwerks, wobei das Verfahren umfasst:

> Empfangen von Paketen eines ersten Netzwerkknotens (1, 11, 12, 13) des 3GPP-IP-Netzwerks;
> Zerteilen der empfangenen Pakete in eine Vielzahl von Strömen, wobei die Pakete jedes Stroms einen IP-Header gemeinsam haben, der einen zweiten Netzwerkknoten (2, 21, 22, 23) des 3GPP-IP-Netzwerks als Ziel für das Paket kennzeichnet;
> in einer Trägerinitialisierungsphase einer NB- oder IU-Schnittstelle, Bestimmen zwischen dem ersten Netzwerkknoten (1, 11, 12, 13) und dem zweiten Netzwerkknoten (2, 21, 22, 23), ob ein Paket-Multiplexing verwendet werden kann;
> Zusammensetzen einer Vielzahl von Paketen, um ein zusammengesetztes Paket zu bilden; und
> Senden des zusammengesetzten Pakets an den zweiten Netzwerkknoten (2, 21, 22, 23).

2. Verfahren nach Anspruch 1, wobei die Pakete eines Stroms Informationen der gleichen Art beinhalten.

3. Verfahren nach Anspruch 2, wobei es sich bei den Paketen wenigstens eines Stroms um VoIP-Pakete handelt.

4. Verfahren nach Anspruch 1, 2 oder 3, wobei der Schritt des Zusammensetzens einer Vielzahl von Paketen, um das zusammengesetzte Paket zu bilden, ein Auswählen eines Pakets aus wenigstens einem ersten Strom und eines Pakets aus wenigstens einem zweiten Strom und ein Zusammensetzen der ausgewählten Pakete zum Bilden des zusammengesetzten Pakets umfasst.

5. Verfahren nach Anspruch 4, wenn von Anspruch 2 oder 3 abhängig, wobei Pakete des ersten Stroms und Pakete des zweiten Stroms Informationen der gleichen Art beinhalten.

6. Verfahren nach einem der vorhergehenden Ansprüche, wobei der Schritt des Zusammensetzens einer Vielzahl von Paketen ein Zusammensetzen von Paketen umfasst, die an dem ersten Netzwerkknoten (1, 11, 12, 13) innerhalb eines vorgegebenen Zeitfensters empfangen wurden.

7. Verfahren nach einem der vorhergehenden Ansprüche, wobei das zusammengesetzte Paket einen gemeinsamen Header (4) und zwei oder mehr multiplexierte Paketfelder (5a, 5b) beinhaltet, wobei jedes multiplexierte Paketfeld (5a, 5b) einem jeweiligen Einzelpaket des zusammengesetzten Paktes entspricht.

8. Verfahren nach Anspruch 8, umfassend den weiteren Schritt des Angebens, in dem gemeinsamen Header (4) des zusammengesetzten Pakets, dass das Paket ein zusammengesetztes Paket ist.

9. Verfahren nach Anspruch 8, umfassend ein Zuordnen eines UDP-Felds (8) zu dem gemeinsamen Header (4) des zusammengesetzten Pakets, wobei das UDP-Feld (8) ein zusammengesetztes Paket kennzeichnet, und ferner umfassend ein Zuordnen eines ausgewählten UDP-Ports, um ausschließlich zusammengesetzte Pakete abzufertigen.

10. Verfahren nach einem der Ansprüche 7 bis 9, umfassend ein Bereitstellen von gemeinsamen RTP-Informationen (12) in dem gemeinsamen Header (4).

11. Verfahren nach einem der Ansprüche 7 bis 9, umfassend ein Bereitstellen von RTP-Informationen (12) für jedes Einzelpaket in dem jeweiligen multiplexierten Paketfeld (5a, 5b).

12. Verfahren nach Anspruch 11, wobei die RTP-Informationen komprimierte RTP-Informationen sind, und umfassend ein Angeben, in dem zusammengesetzten Pakt, dass das Paket komprimierte RTP-Informationen beinhaltet, wobei jedes multiplexierte Paketfeld einen jeweiligen Header beinhaltet, und wobei das Verfahren ferner ein Angeben in dem jeweiligen Header umfasst, dass das Paket komprimierte RTP-Informationen beinhaltet.

13. Verfahren nach einem der vorhergehenden Ansprüche, umfassend den weiteren Schritt des Zerteilens, an dem zweiten Netzwerkknoten (2, 21, 22, 23), des zusammengesetzten Pakets in dessen Einzelpakete.

14. Speichermedium, beinhaltend ein Programm zum Steuern eines Prozessors, damit er ein wie in einem der Ansprüche 1 bis 13 definiertes Verfahren ausführt.

15. Knoten (1, 11, 12, 13) eines 3GPP-IP-Netzwerks, wobei der Knoten umfasst:

   Mittel zum Empfangen von Paketen;
   Mittel zum Zerteilen der empfangenen Pakete in eine Vielzahl von Strömen, wobei die Pakete jedes Stroms einen IP-Header gemeinsam haben, der einen zweiten Netzwerkknoten (2, 21, 22, 23) des 3GPP-IP-Netzwerks als Ziel für das Paket kennzeichnet;
   Mittel zum Bestimmen, in einer Trägerinitialisierungsphase einer NB- oder IU-Schnittstelle, mit dem zweiten Netzwerkknoten (2, 21, 22, 23), ob ein Paketmultiplexing verwendet werden kann;
   Mittel zum Zusammensetzen einer Vielzahl von Paketen zum Bilden eines zusammengesetzten Paktes; und
   Mittel zum Senden des zusammengesetzten Pakets zu dem zweiten Netzwerkknoten (2, 21, 22, 23).

16. Knoten nach Anspruch 15, der dazu ausgelegt ist, die empfangenen Pakete in die Vielzahl von Strömen zu zerteilen, sodass die Pakete eines Stroms Informationen der gleichen Art beinhalten, und/oder dazu ausgelegt ist, das zusammengesetzte Paket durch Auswählen eines Pakets aus wenigstens einem ersten Strom und eines Pakets aus wenigstens einem zweiten Strom und Zusammensetzen der ausgewählten Pakete zum Bilden des zusammengesetzten Pakets zu bilden, wobei Pakete des ersten Stroms und Pakete des zweiten Stroms Informationen der gleichen Art beinhalten.

**Revendications**

1. Procédé de transport de paquets IP entre des noeuds d'un réseau IP 3GPP, le procédé comprenant :

   la réception de paquets au niveau d'un premier noeud de réseau (1, 11, 12, 13) du réseau IP 3GPP ;
   la séparation des paquets reçus en une pluralité de flux, où les paquets de chaque flux partagent une en-tête IP commune indiquant un deuxième noeud de réseau (2, 21, 22, 23) du réseau IP 3GPP comme une destination pour le paquet ;
   dans une phase d'initialisation de support d'un NB ou d'une interface Iu, l'accord, entre le premier noeud de réseau (1, 11, 12, 13) et le deuxième noeud de réseau (2, 21, 22, 23), du fait qu'un multiplexage de paquet peut être utilisé ;

**EP 1 994 716 B1**

la fusion d'une pluralité de paquets pour former un paquet fusionné ; et
l'envoi du paquet fusionné au deuxième noeud de réseau (2, 21, 22, 23).

2. Procédé selon la revendication 1, dans lequel les paquets d'un flux contiennent des informations du même type.

3. Procédé selon la revendication 2, dans lequel les paquets d'au moins un flux sont des paquets VoIP.

4. Procédé selon la revendication 1, 2 ou 3, dans lequel l'étape de fusion d'une pluralité de paquets pour former le paquet fusionné comprend la sélection d'un paquet à partir d'au moins un premier flux et d'un paquet à partir d'au moins un deuxième flux et la fusion des paquets sélectionnés pour former le paquet fusionné.

5. Procédé selon la revendication 4 quand elle dépend de la revendication 2 ou 3, dans lequel des paquets du premier flux et des paquets du deuxième flux contiennent des informations du même type.

6. Procédé selon une quelconque revendication précédente, dans lequel l'étape de fusion d'une pluralité de paquets comprend la fusion de paquets qui ont été reçus au niveau du premier noeud de réseau (1, 11, 12, 13) dans une fenêtre de temps prédéterminée.

7. Procédé selon une quelconque revendication précédente, dans lequel le paquet fusionné contient une en-tête commune (4) et au moins deux champs de paquet multiplexés (5a, 5b), chaque champ de paquet multiplexé (5a, 5b) correspondant à un paquet constitutif correspondant du paquet fusionné.

8. Procédé selon la revendication 8 et comprenant l'autre étape d'indication, dans l'en-tête commune (4) du paquet fusionné, du fait que le paquet est un paquet fusionné.

9. Procédé selon la revendication 8 et comprenant l'attribution d'un champ UDP (8) à l'en-tête commune (4) du paquet fusionné, le champ UDP (8) indiquant un paquet fusionné, et comprenant en outre l'attribution d'un port UDP sélectionné pour gérer seulement des paquets fusionnés.

10. Procédé selon l'une quelconque des revendications 7 à 9 et comprenant la fourniture d'informations RTP communes (12) dans l'en-tête commune (4).

11. Procédé selon l'une quelconque des revendications 7 à 9 et comprenant la fourniture d'informations RTP (12) pour chaque paquet constitutif dans le champ de paquet multiplexé (5a, 5b) respectif.

12. Procédé selon la revendication 11, dans lequel lesdites informations RTP sont des informations RTP compressées et comprenant l'indication, dans le paquet fusionné, du fait que le paquet contient des informations RTP compressées dans lesquelles chaque champ de paquet multiplexé contient une en-tête respective, et dans lequel le procédé comprend en outre l'indication dans l'en-tête respective du fait que le paquet contient des informations RTP compressées.

13. Procédé selon une quelconque revendication précédente et comprenant l'autre étape, au niveau du deuxième noeud de réseau (2, 21, 22, 23), de séparation du paquet fusionné en ses paquets constitutifs.

14. Support de stockage contenant un programme pour commander un processeur pour exécuter un procédé selon l'une quelconque des revendications 1 à 13.

15. Noeud (1, 11, 12, 13) d'un réseau IP 3GPP, le noeud comprenant :

des moyens pour recevoir des paquets ;
des moyens pour séparer les paquets reçus en une pluralité de flux, où les paquets de chaque flux partagent une en-tête IP commune indiquant un deuxième noeud de réseau (2, 21, 22, 23) du réseau IP 3GPP comme une destination pour le paquet ;
des moyens pour, dans une phase d'initialisation de support d'un NB ou d'une interface Iu, concorder, avec le deuxième noeud de réseau (2, 21, 22, 23), le fait qu'un multiplexage de paquet peut être utilisé ;
des moyens pour fusionner une pluralité de paquets pour former un paquet fusionné ; et
des moyens pour envoyer le paquet fusionné au deuxième noeud de réseau (2, 21, 22, 23).

16. Noeud selon la revendication 15 et adapté pour séparer les flux reçus en une pluralité de flux de manière que les paquets d'un flux comprennent des informations du même type et/ou sont adaptés pour former le paquet fusionné en sélectionnant un paquet à partir d'au moins un premier flux et un paquet à partir d'au moins un deuxième flux et en fusionnant les paquets sélectionnés pour former le paquet fusionné, dans lequel des paquets du premier flux et des paquets du deuxième flux contiennent des informations du même type.

Figure 1

## Figure 2

```
┌─────────────────┐
│  Receive packets │    1
└─────────────────┘
         │
┌─────────────────┐
│ Sort packets into│    2
│     streams      │
└─────────────────┘
         │
┌─────────────────┐
│  Select packets  │    3
└─────────────────┘
         │
┌─────────────────┐
│ Form merged packet│   4
└─────────────────┘
         │
┌─────────────────┐
│ Transmit merged  │    5
│     packet       │
└─────────────────┘
```

## Figure 3 (a)

```
         ┌─────────────────────────────┐
      ┌  │ IP header (20/40 bytes)     │  6
   4 ─┤  ├─────────────────────────────┤
      └  │ UDP header (8 bytes)        │  7
         ├─────────────────────────────┤
      ┌  ┌ │ MUX header (3 bytes)      │  8a
   5a ┤  ┤ ├─────────────────────────────┤
      └  └ │ Payload (1-256 bytes)     │  9a
 5 ─┤    ├─────────────────────────────┤
      ┌  ┌ │ MUX header (3 bytes)      │  8b
   5b ┤  ┤ ├─────────────────────────────┤
      └  └ │ Payload (1-256 bytes)     │  9b
         └─────────────────────────────┘
```

## Figure 3 (b)

```
         ┌─────────────────────────────┐
      ┌  │ IP header (20/40)           │  6
      │  ├─────────────────────────────┤
   4 ─┤  │ UDP header (8)              │  7
      │  ├─────────────────────────────┤
      └  │ RTP HEADER (12)             │  10
         ├─────────────────────────────┤
      ┌  ┌ │ MUX header (3)            │  8a
   5a ┤  ┤ ├─────────────────────────────┤
      └  └ │ Payload (1-256)           │  9a
 5 ─┤    ├─────────────────────────────┤
      ┌  ┌ │ MUX header (3)            │  8b
   5b ┤  ┤ ├─────────────────────────────┤
      └  └ │ Payload (1-256)           │  9b
         └─────────────────────────────┘
```

## Figure 3 (c)

```
                    8a
          ┌──────────────┴──────────┐
            2 bytes          1byte
         ┌────────────────┬──────────┐
         │    MUX ID      │    LI    │
         └────────────────┴──────────┘
                 15            16
```

## Figure 3 (d)

## Figure 4

Figure 5

| 1 bit | 15 Bits | 8 Bits |
|-------|---------|--------|
| T | MUX ID | LI |

18            15            16

8a

Figure 6

17'

| 3 bits | 5 bits |
|--------|--------|
| SN | TS |

19         20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6618368 B

- US 2003019350 A

### Non-patent literature cited in the description

- **HA et al.** Voice traffic multiplexing scheme with guaranteed QoS between VoIP access routers using Diff-sez-v. *Electronics Letters,* 2001, vol. 37 (13
- **TANIGAWA et al.** Simple RTP Multiplexing Transfer Methods for VoIP. *IETF Standard-working-draft,* 18 November 1998

- **CHUAH et al.** A Lightweight IP Encapsulation (LIFE) Scheme. *IETF Standard-working-draft,* August 2000